Europäisches Patentamt

(19) European Patent Office

Office européen des brevets

(11) **EP 0 905 967 A1**

(12) **EUROPEAN PATENT APPLICATION**

(43) Date of publication:
31.03.1999 Bulletin 1999/13

(51) Int. Cl.⁶: $H04N\ 1/32$

(21) Application number: 97810708.4

(22) Date of filing: 26.09.1997

(84) Designated Contracting States:
AT BE CH DE DK ES FI FR GB GR IE IT LI LU MC NL PT SE
Designated Extension States:
AL LT LV RO SI

(71) Applicant:
Digital Copyright Technologies AG
8004 Zürich (CH)

(72) Inventors:
• Herrigel, Alexander
8706 Meilen (CH)
• Oruanaidh, Joseph J.K.
1227 Genève (CH)
• Pun, Thierry
1224 Chêne-Bougeries (CH)

(74) Representative:
Blum, Rudolf Emil Ernst et al
c/o E. Blum & Co
Patentanwälte
Vorderberg 11
8044 Zürich (CH)

(54) **Method for generating digital watermarks and for exchanging data containing digital watermarks**

(57)    A method for generating digital watermarks and for exchanging data containing such watermarks is described. The system is based on an watermarking technique which is robust against image transformation techniques such as compression, rotation, translation, and scaling. It uses modulation of the magnitude components in Fourier space and adds/reads a template in the log polar transform of the magnitude components. The template is used for analyzing scaling and rotation. In addition, the system applies cryptographic protocols and public key techniques for both, encoding the watermark and transferring watermarked data. Preferably, an author (ICH) encodes the watermark using an asymmetric cryptographic key pair provided by a public key infrastructure (PKI) and registers the watermarked data at a trusted registration party (ICO) before transmitting the data to a receiving party (IB). The latter can use the public key infrastructure (PKI) for verifying authorship. Transmission between the parties uses data protection provided by the cryptographic keys.

Fig. 3

**Description**

The present invention relates to a method for generating digital watermarks and for transmitting data containing digital watermarks according to the preamble of the independent claims.

Digital watermarking is a method for marking data sets, such as images, sound or video. A digital watermark consists of a slight modification of the data set that does not affect the data set's usability but that can be detected using dedicated analysis software or apparatus. Watermarking can e.g. be used for marking authorship or ownership of a data set.

Digital watermarking can be seen as a fundamental-problem in digital communications (see e.g. I. Cox, J. Killian, T. Leighton, and T. Shamoon, "Secure spread spectrum communication for multimedia", Technical report, N.E.C. Research Institute, 1995). Early methods of encoding watermarks consisted of no more than incrementing an image component to encode a binary '1' and decrementing to encode a '0' (G. Caronni "Assuring Ownership Rights for Digital Images" in H. H. Brueggemann and W. Gerhardt-Haeckl, editors, Reliable IT Systems VIS '95, Vieweg Publishing Company, Germany, 1995). Tirkel et al. (A. Z. Tirkel, G. A. Rankin, R. G. van Schyndel, W. J. Ho, N. R. A. Mee, and C. F. Osborne, "Electronic watermark", in Dicta-93, pages 666-672, Macquarie University, Sydney, December 1993) and van Schyndel et al. (A. Z. Tirkel, R. G. van Schyndel, and C. F. Osborne, "a two-dimensional digital watermark", in ACCV'95, pages 378-383, University of Queensland, Brisbane, December 6-8 1995) have applied the properties of m-sequences to produce oblivious watermarks resistant to filtering, cropping and reasonably robust to cryptographic attack. Matsui and Tanaka (K. Matsui and K. Tanaka, "Video-Steganography : How to secretly embed a signature in a picture", in IMA Intellectual Property Project Proceedings, pages 187-206, January 1994) have applied linear predictive coding for watermarking. Their approach to hiding a watermark is to make the watermark resemble quantization noise. Tirkel and Osborne (see above) were the first to note the applicability of spread spectrum techniques to digital image watermarking. Since then there has been an increasing use of spread spectrum in digital watermarking. It has several advantageous features, such as cryptographic security (see Tirkel and Osborne, above), and is capable of achieving error free transmission of the watermark near or at the limits given by the maximum channel capacity (J. Smith and B. Comiskey, "Modulation and information hiding in images", in Ross Anderson, editor, Proceedings of the First International Workshop in Information Hiding, Lecture Notes in Computer Science, pages 207-226, Cambridge, UK, May/June 1996. Springer). Fundamental information theoretic limits to reliable communication have been discussed by some authors (see Smith and Comiskey, above). The shorter the payload of a watermark, the better are the chances of it being communicated reliably. Spread spectrum is an example of a symmetric key cryptosystem (B. Schneier, "Applied Cryptography", Wiley, 2nd edition, 1995). System security is based on proprietary knowledge of the keys (or pseudo random seeds) which are required to embed, extract or remove an image watermark. One provision in the use of a spread spectrum system is that it is important that the watermarking be non-invertible because only in this way can true ownership of the copyright material be resolved (S. Craver, N. Memon, B. Yeo, and M. Yeung, "Can invisible marks resolve rightful ownerships ?", IS&T/SPIE Electronic Imaging '97 : "Storage and Retrieval of Image and Video Databases", 1997). Ó Ruanaidh et al. (J. K. Ó Ruanaidh, W. J. Dowling, and F. M. Boland, "Phase watermarking of images", IEEE International Conference on Image Processing, Lausanne, Switzerland, September 1996) and Cox et al. (see above) have developed perceptually adaptive transform domain methods for watermarking. In contrast to previous approaches listed above the emphasis was on embedding the watermark in the most significant components of an image. The general approach used in these papers is to divide the image into blocks. Each block is mapped into the transform domain using either the Discrete Cosine Transform (W. B. Pennebaker and J. L. Mitchell, "JPEG Still Image Compression Standard", Van Nostrand Reinhold, New York, 1993), the Hadamard Transform (W. G. Chambers, "Basics of Communications and Coding", Oxford Science Publications. Clarendon Press Oxford, 1985) or the Daubechies Wavelet Transform (W.H. Press, S.A. Teukolsky, W.T. Vetterling, and B.P. Flannery, "Numerical Recipes in C", Cambridge University Press, second edition, 1992). Information has been embedded using the DCT (J. J. K. Ó Ruanaidh, W. J. Dowling, and F. M. Boland, "Watermarking digital images for copyright protection", IEEE Proceedings on Vision, Image and Signal Processing, 143(4) :250-256, August 1996, based on the paper of the same title at the IEEE Conference on Image Processing and Its Applications, Edinburgh, July 1995) FFT magnitude, and phase, Wavelets (see refs. of Ruanaidh, Dowling and Boland, above), Linear Predictive Coding (see Matsui et al., above) and fractals (P. Davern and M. Scott, "Fractal based image steganography", in Ross Anderson, ed., Proceedings of the First International Workshop in Information Hiding, Lecture Notes in Computer Science, pp. 279-294, Cambridge, UK, May/June 1996. Springer Verlag).

The industrial importance of digital watermarking has resulted in a number of products on the market, either based on spread spectrum techniques or additional registration services. They include the Picturemarc system by Digimarc, SureSign (former FBI's Fingerprint) by HighWater Signum, $IP_2$ system by Intellectual Protocols, the Argent system by Digital Information Commodities Exchange, the PixelTag system by the MIT Media Lab, the SysCop system from Zhao and Koch by the Frauenhofer-Institut fur Graphische Datenverarbeitung (J. Zhao and E. Koch, "Embedding robust labels into images for copyright protection", Technical report, Fraunhofer Institute for Computer Graphics, Darmstadt, Germany, 1994. J. Zhao, "A WWW Service To Embed And Prove Digital Copyright Watermarks", Proc. Of the European Conference on Multimedia Application, Services and Techniques, Louvain-La-Neuve, Belgium, May 1996), and the Tigermark system from NEC.

The approach of Zhao and Koch, based on the JPEG image compression algorithm, proceeds by segmenting the image into individual 8 x 8 blocks. Only eight coefficients occupying particular positions in the 8 x 8 block of DCT coefficients can be marked. These comprise the low frequency components of the image block but exclude the mean value coefficient as well as the low frequencies. Three of the remaining DCT coefficients are selected using a pseudo random number generator to convey information. The resemblance of this technique to frequency hop spread spectrum communications is also mentioned and the blocks are placed at random positions in the image. A WWW registration service has been proposed for a local registration and a local watermarking, for a server registration and a server watermarking, and for a local watermarking and a server registration.

J.-F. Delaigle at al. (J.-F. Delaigle, J.-M. Boucqueau, J.-J. Quisquater & B. Macq, "Digital Images protection techniques in a broadcast framework: An overview", Laboratoire de Télécommunications et de Télédéction, Université Catholique de Louvain) have applied signature labelling techniques for the copyright protection of digital images. Their approach is based on an enhanced image format and generates a digital signature label in front of the image. This signature label can be easily overwritten or destroyed.

It is an objective of the present invention to provide a system of the type mentioned initially that provides a simple and secure way of generating and transmitting watermarked data.

In one aspect of the invention, this object is achieved by using an asymmetric private and public key pair, as it is used in cryptography. The original data set (cover data set, cover image) is watermarked, wherein the watermark is encoded using one or both of said keys. The watermarked data set (stego data set, stego image) is then transmitted to a second party, wherein the same keys are used for establishing a secure transmission between the parties. This simplifies the administration of keys since the only keys required are the key pair mentioned above. In addition to this, because cryptographic keys are less prone to guessing attacks than simple passwords, the security of the watermark is improved.

In a preferred embodiment, both parties use asymmetric key pairs and a key protocol for establishing a common key between them.

The party creating the watermark can embed a private as well as a public watermark in the data set, wherein the private watermark is derived from the private key, the public watermark from the public key. The public watermark can be detected by third parties while the private watermark can only be detected using private information. Preferably, the private watermark is not derived from the private key directly but from a hash value of the same, such that the author of the watermark does not have to reveal his private key if the private watermark is to be verified.

In a further aspect of the invention, the author of the watermark is again provided with an asymmetric cryptographic key pair. He embeds a message together with its cryptographic signature in the watermark. When verifying this watermark, the presence of the signature increases reliability because it proves that the message was signed by the author.

In yet another aspect of the invention, the cover data set is provided with a digital watermark and then transmitted to a registration party that permanently stores at least a hash value, time information and origin of the stego data set.

In another aspect of the invention, a template modulation pattern is added to the Fourier transform of an image that is to be provided with a watermark. For checking the watermark, the Fourier transform of the stego-image is calculated. From this Fourier transform, the log polar mapping transform is generated, which is then searched for the modulation pattern. Using the log polar transform of the Fourier transform has the advantage that scaling and rotation of the stego image are expressed in translations. This allows an easy search for rotation and scaling using cross-correlation techniques.

In still another aspect of the invention, the image to be watermarked is divided into blocks and the magnitude components of the Fourier transform of each block is modulated using the same pattern. This method provides robustness against cropping of the stego-image because a cropping leads to a circular translation in each block. Preferably, the magnitude components of the Fourier transform are modulated, wherein the sign of the modulation should be derived from the phase components, thereby reducing interference between the image data and the watermark as explained in the following disclosure.

Further aspects, advantages and applications of the invention are described in the claims and the following description, which description makes reference to the figures. They show:

Fig. 1 the parties involved in individual watermark protection,

Fig. 2 the parties involved in watermark protection using registered cryptographic keys,

Fig. 3 the parties involved in watermark protection using registered cryptographic keys and a registration party,
Fig. 4 the steps taken for embedding a watermark,
Fig. 5 the steps for generating the template,
Fig. 6 the steps for reading a watermark,
Fig. 7 the steps for reading the template,
Fig. 8 the tiling of the watermark in a stego-image, and
Fig. 9 the tiling of the watermark in a cropped stego-image.

I. Terms and Symbols:

Before describing a preferred method and apparatus according to the invention, some key terms and symbols used in its description are explained in the following:

"Image": An image in either digital or physical form which may constitute a still image or a video frame. It can also refer other types of data, such as video and sound, in particular when being used within the context of the protection and owner authentication methods of section II of the disclosure.
"Signal": A signal in either digital or physical form. It may refer to one dimensional or multidimensional signals such as image and video.
"Image Copyright Holder (ICH)": A party (or a process acting on behalf of it) "owning" a digital image. This is the party that generates the watermarks.
"Image Buyer (IB)": A party (or a process acting on behalf it) which obtains (e.g. by purchase) via electronic means a specific image from the ICH.
"Image Authentication Process (IAP)": A process for verifying that the image has been processed (generation, storage, retrieval, modification, transmission) before by the ICH.
"Image Authentication Data (IAD)": The authentication data used in the IAP.
"Stego": Implies that an image or data is marked (i.e. it has an IAD embedded in it). The stego image is also referred to as the stego data set.
"Cover": Implies that an image or data is unmarked (i.e. it has no IAD embedded in it). The cover image is also referred to as the cover data set.
"Watermark": The form the IAD takes when it is in a form suitable for embedding in a signal.
"Image Copyright Office (ICO)": An organization (or a process which acting on behalf it) which registers ownership for a specific image. Successful registration is based on a verification procedure, e.g. by checking the name and postal address of CH, information how ownership was acquired, the title of the image, a description of the type of image (artistic, literary, musical, dramatic) and date and place of first publication. After successful registration a digital copyright certificate can be generated.
"Digital copyright certificate": Digital copyright data which comprise the copyright certificate data and a digital signature.
"Copyright Request Data (CRD)": Copyright data which contains the stego image, the image ID of the cover image, a Universal Copyright Convention Notice, a Copyright Symbol, the term "Copyright", the year of the copyright, the name of the copyright holder, and the phrase "All Rights Reserved".
"Copyright Certificate Data (CCD)": Copyright data which contains at least an image ID, a hash value of the digital image, a time stamp, a Universal Copyright Convention Notice, a Copyright Symbol, the term "Copyright", the year of the copyright, the name of the copyright holder, and the phrase "All Rights Reserved".
"Digital signature": A data string which has been generated by a digital signature generation transformation.
"Digital signature generation transformation": A method for producing a digital signature.
"Digital signature verification transformation": A method for verifying whether a digital signature is authentic or not.
"Digital signature scheme": A scheme based on asymmetric cryptographic techniques whose private transformation is used for the digital signature generation and whose public transformation is used for the digital signature verification.
"Digital signature scheme with message recovery": A digital signature scheme for which a priori knowledge of the input data is not required for the signature verification transformation.
"Digital signature scheme with appendix": A digital signature scheme for which the input data is required as input to the digital signature verification transformation.
"Asymmetric key pair": A pair of related cryptographic keys where the private key defines the private transformation and the public key defines the public transformation.
"Symmetric key": A cryptographic key used with a symmetric cryptographic technique and known only to a set of specified entities.
"Asymmetric key agreement protocol": A protocol whereby a shared symmetric key becomes available to two parties for subsequent cryptographic use. The symmetric key is exchanged on the basis of a digital signature scheme with message recovery. The signed keys are encrypted with an asymmetric public key.
"Public Key Infrastructure (PKI)": An organization (or processes which acts on behalf of it) which offers services for the generation, registration, certification, distribution, validation, and revocation of a certificate associated with an asymmetric key pair.
"Public watermark": A watermark that can be detected using a publicly available key (or a hash value thereof).
"Private watermark": A watermark that can only be detected using a secret key (or a hash value thereof). It is not possible for an unauthorized third party to overwrite or delete the private watermark without the cryptographic secret keying information.

"Embedded authentication data": The hidden IAD.

"Payload": The core of the hidden IAD in bit form without error control coding applied.

"Image ID": The following format scheme for a globally unique ID: The first 3 bytes determine the ICO, the following 3 bytes determine the ICH ID defined by the ICO. Finally the ICH can freely assign last 4 bytes for each one of his digital images.

"Oblivious": A watermarking technique which does not require the cover image for extracting the mark. In other words, only the stego image is required to extract the mark when using an oblivious marking scheme.

"Template": A hidden message encoded in the image. By detecting the template, the scaling (zooming) and rotation suffered by a stego-image can be determined.

"Pseudo random seed": A value used to initialize a pseudo random number generator.

Symbols:

H distinguished (unique) name of the Image Copyright Holder H

O distinguished name of the Image Copyright Office O

B distinguished name of the Image Buyer B

I distinguished name of the Public Key Infrastructure

$Cert_H$ entity H's public key certificate from I

$Cert_O$ entity O's public key certificate from I

$Cert_B$ entity B's public key certificate from I

$(p_X, v_X)$ the elliptic curve key pair, with a key size of at least 209 bits, of an entity with the distinguished name X. See Alfred J. Menezes, Paul C. Van Oorschot, and Scott A. Vanstone, "Handbook of Applied Cryptography", CRC Press, 1996, ISBN 0-8493-8523-7

CC a copyright certificate

KS key size of the elliptic curve pair

$DSSMR_G(X,Y,Z)$ an elliptic curve based digital signature generation scheme with message recovery, where X denotes the private key, Y the input data to be signed, and Z the resulting signature.

$DSSMR_V(X,Y,Z)$ an elliptic curve based digital signature verification scheme with message recovery, where X denotes the public key, Y the input data, and Z the resulting output data.

$DSSAP_G(X,Y,Z)$ an elliptic curve based digital signature generation scheme with appendix, where X denotes the private key, Y the input data to be signed, and Z the resulting signature.

$DSSAP_V(X,Y,Z)$ an elliptic curve based digital signature verification scheme with appendix, where X denotes the public key, Y the input data, and Z the resulting output data.

$K_{XY}$ a secret key for a symmetric cryptosystem shared between two entities with the distinguished name X and Y.

$K_{XY}$[Data] denotes the cipher text generated by a symmetric cryptosystem with plain text Data.

crh a collision resistant hash function

$AKAP(X,Y,K_{XY},ps_X,vs_X, pc_X, vc_X,ps_Y, vs_Y, pc_Y, vc_Y)$ applied asymmetric key agreement protocol (see ISO/IEC 11770-3, "Information technology-Security techniques-Key management, Part 3: mechanisms using asymmetric techniques") with entity X's private signature key $ps_X$, entity X's public verification key $vs_X$, entity X's private deciperment key $pc_X$, entity X's public encipherment key $vc_X$, entity Y's private signature key $ps_Y$, entity Y's public verification key $vs_Y$, entity Y's private decipherment key $pc_Y$, and entity Y's public encipherment key $vc_Y$ between the entities with the distinguished name X and Y. After the protocol was successfully executed, the two entities have agreed on a $K_{XY}$.

OIAE(X,Y,CI, SI) the oblivious image owner authentication embedding algorithm with the seed X, the payload Y, the cover image CI, and the resulting stego image SI.

OIAV(X,SI,Y) the oblivious image owner authentication detection algorithm with the seed X, the stego image SI, and the resulting payload Y)

TVP time-variant parameter, such as a random number, a time-stamp, or a sequence number.

|| concatenation of two data elements in this order.

CI Cover Image

SI Stego Image

## II. Protection and owner authentication:

Depending on the proof-level to be provided for the protection, the preferred embodiment of the apparatus and method according to the invention provides three different levels of reliability, which are based on each other, namely: individual watermark protection, watermark protection with registered cryptographic keys, and watermark protection with an ICO on the basis of registered cryptographic keys.

The present method and apparatus is based on an image owner authentication technique, described below, which embeds and detects the IAD as the payload of a watermark. The applied image owner authentication technique is based on a perceptually adaptive spread spectrum technique which provides reliable means of embedding robust watermarks. Such a technique will be discussed in section III. In addition, a spread spectrum techniques is a form of symmetric cryptosystem. In order to embed or extract a watermark, it is necessary to know the exact values of the seed used to produce pseudo random sequences used to encode a watermark. The seeds are considered to be cryptographic keys for watermark generation and verification. System security can therefore be based on proprietary knowledge of the keys and provide in addition the necessary security parameters needed for a secure communication (mutual authentication, integrity, confidentiality, non-repudiation) in the trading process of digital images. Because spread spectrum signals are statistically independent (and therefore virtually orthogonal), the present method and apparatus encodes more than one watermark in an image at the same time, namely private watermarks and public watermarks. The public watermarks indicate that the image is copyright material and provide information on true ownership. At the same time there are secure private watermarks whose secrecy depends on the private key of the asymmetric key pair of the ICH.

Since the system provides for the registration of the public key of the asymmetric key pair, the ICH can prove that he is the only person in the possession of the adequate private key of the asymmetric key pair and, therefore, the generator of the private watermarks.

The system also provides the secure registration (mutual authentication, integrity, confidentiality, non-repudiation) of watermark encoded images (data sets) at an ICO. The stego image is registered at the ICO and a digital copyright certificate is generated which is signed by the ICO. If an unauthorized third party has also encoded watermarks in the same image, conflicting claims in copyright disputes can be resolved. Examining the time stamps of the copyright certificate enables the secure identification of the legal owner: The earliest of the time stamps identifies the legal owner if no copyright revocation request has been applied.

Watermark protection with registered cryptographic keys and the ICO based copyright protection are based on a PKI. The PKI issues on request public key certificates containing the public key of the party, the distinguished name of the party, and a time stamp. Every certificate is signed with the PKI's private key and the trust is built on the validity of the authentic copy of the PKI's public key (we assume that the public key of the PKI is accessible, authentically distributed, and verifiable by every party).

In the following the three levels of the system are described.

a) Individual watermark protection

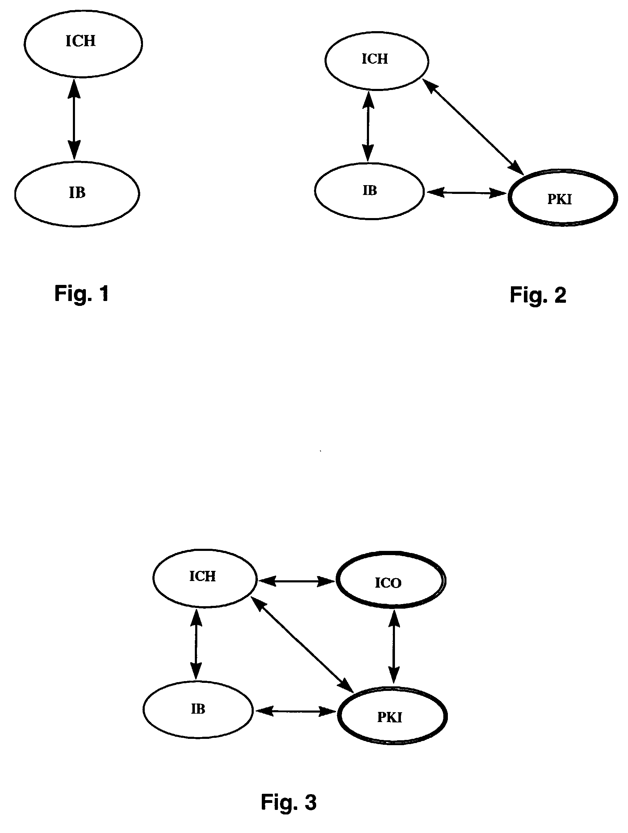

As shown in Fig. 1, the apparatus for the individual copyright protection is partitioned into two processes, namely the ICH with the distinguished name H and the IB process with the distinguished name B. Suppose $(ps_H, vs_H)$ and $(pc_H, vc_H)$ are the elliptic curve key pairs of H, $(ps_B, vs_B)$ and $(pc_B, vc_B)$ are the elliptic curve key pairs of B. Suppose H has an authentic copy of $vs_B$, $vc_B$ and B has an authentic copy of $vs_H$, $vc_H$ before they start any communication.

The following phases are applied by the processes of the individual copyright protection apparatus:

Phase 1:

H retrieves the cover image CI, generates a unique image identifier $ID_{CI}$, stores $ID_{CI}$, and retrieves the key pair $(ps_H, vs_H)$.

Phase 2 (generating private watermark):

1. H generates a private $IAD_{CI}$ applying

$$DSSMR_G(ps_H, ID_{CI}, IAD_{CI}).$$

2. H partitions, depending on the key size KS, the $IAD_{CI}$ into different blocks $BL_i$, $1 \leq i \leq P$, with a length of 128 bits ($P := \lceil IAD_{CI}/KS \rceil$). This ensures that the blocks to be included in each watermark are sufficiently small.

3. H generates the stego image SI applying for every i, $1 \leq i \leq P$, using the transformation:

$$OIAE(crh(ps_H) \text{ XOR } crh(i), BL_i, CI_i, SI_i),$$

where $CI_i$ denotes the cover image (stego image from the previous iteration, $CI_1 := CI$) and $SI_i$ denotes the stego image of iteration i. The resulting stego image is then $SI := SI_P$ Set $CI^* := SI$.

Phase 3 (generating public watermark):

H generates a public $IAD_{CI}$ applying

$$DSSMR_G(ps_H, CD, IAD_{CI}),$$

with CD := "Copyright by"$||H||TVP||$ "All Rights Reserved".

H again partitions, depending on the key size KS, the $IAD_{CI}$ into different blocks $BL_i$, $1 \leq i \leq P$, with a length of 128 bits ($P := \lceil IAD_{CI}/KS \rceil$).

H generates the stego image SI applying for every i, $1 \leq i \leq P$, the following transformation:

$$OIAE(crh(vs_H) \text{ XOR } crh(i), BL_i, CI_i, SI_i),$$

where $CI_i$ is the cover image (stego image from the previous iteration, $CI_1 = CI^*$, with $CI^*$ from the previous phase) and $SI_i$ is the stego image of iteration i. The resulting stego image is $SI = SI_P$

Phase 4:

H stores the resulting stego image SI and may generate a signed copyright certificate.

Phase 5:

H and B execute the following steps for the trading of copyright protected digital images:

1. H and B execute

$$AKAP(H, B, K_{HB}, ps_H, vs_H, pc_H, vc_H, ps_B, vs_B, pc_B, vc_B)$$

for the generation of a shared symmetric session key $K_{HB}$.

2. B generates the trading transaction T1,

$$T1 := \langle K_{HB}[TD||SigTD] \rangle, \text{ with}$$
$$TD := ID_{CI}||TVP||B||H, \text{ and}$$
$$DSSAP_G(ps_B, TD, SigTD).$$

B then transmits T1 to H.

3. H receives T1, deciphers $K_{HB}[TD||SigTD]$, and verifies TD, applying

$$DSSAP_V(vs_B, SigTD, IVR)$$

where IVR denotes the intermediate verification result. If

$$IVR = crh(TD), \text{ with } TD := ID_{CI}||TVP||B||H,$$

then TD has been successfully verified and the next step shall be executed. In any other case, the processing and communication between the H and B is stopped.

4. If the verification was successful, H retrieves with the $ID_{CI}$ information the corresponding stego image SI and generates the trading transaction

$$T2 := \langle K_{HB}[TD||SigTD] \rangle, \text{ with}$$
$$TD := SI ||TVP||H||B, \text{ and } DSSAP_G(ps_H, TD, SigTD).$$

H then transmits T2 to B.

5. B receives T2, deciphers $K_{HB}[TD||SigTD]$, and verifies TD, applying

$$DSSAP_V(vs_H, SigTD, IVR),$$

where IVR denotes the intermediate verification result. If IVR = crh(TD), with TD := SI||TVP||H||B, then TD has been successfully verified. B then checks the IAD applying for every i, $1 \le i \le P$, the following transformation:

$$OIAV(crh(vs_H) \text{ XOR } crh(i), SI, PL_i),$$

where $SI_i$ denotes the stego image and $PL_i$ the detected payload of the i-th public watermark. (If P is not known, the procedure is iteratively applied until no more public watermark can be detected). The $IAD_{CI}$ is then generated by concatenating the $PL_i$, i.e.

$$IAD_{CI} := PL_1||PL_2||...||PL_N, 1 \le i \le P.$$

$IAD_{CI}$ is then verified applying

$$DSSMR_V(vs_H, IAD_{CI}, OD),$$

with OD as the output data. If OD is

"Copyright by"||H||TVP|| "All Rights Reserved",

B has verified H as the copyright holder, if the public watermarks have not been modified (overwritten).

Remark:

In the case of a legal copyright dispute, H can retrieve the $IAD_{CI}$ and construct the corresponding unique image ID. Since the generation of the same asymmetric key pair by two distinguished entities is very unlikely, the construction of the unique image ID provides a good level of proof against copyright infringement. In the case of watermark protection with registered keys, the generation of the same asymmetric key pair by two distinguished entities can be prevented.

Depending on the applied asymmetric scheme the private decipherment key may be identical to the private signature key and the public encipherment key may be identical with the public verification key.

b) Watermark protection with registered keys:

As shown in Fig. 2, the apparatus for the copyright protection with registered cryptographic keys is partitioned into three processes, namely the ICH with the name H, the IB process with the name B, and the PKI process with the name I. Suppose $(ps_H, vs_H)$, $(pc_H, vc_H)$, $(ps_B, vs_B)$, $(pc_B, vc_B)$, $(ps_I, vs_I)$, and $(pc_I, vc_I)$ are the unique elliptic curve key pairs of H, B, and I, respectively. Suppose H has an authentic and actual copy of $Cert_B$ which signature was verified with the authentic copy of $vs_I$ and the B has an authentic and actual copy of $Cert_H$ which signature was verified with the authentic copy of $vs_I$. Then the same phases as for the individual watermark protection apparatus have to be applied.

Remark:

Since the generated asymmetric key pairs are unique, the ICH can be uniquely identified if no additional watermarks by unauthorized persons have been encoded into the SI of the ICH. The ICO based watermark protection provides the necessary counter measures to prevent this threat.

c) ICO based watermark protection:

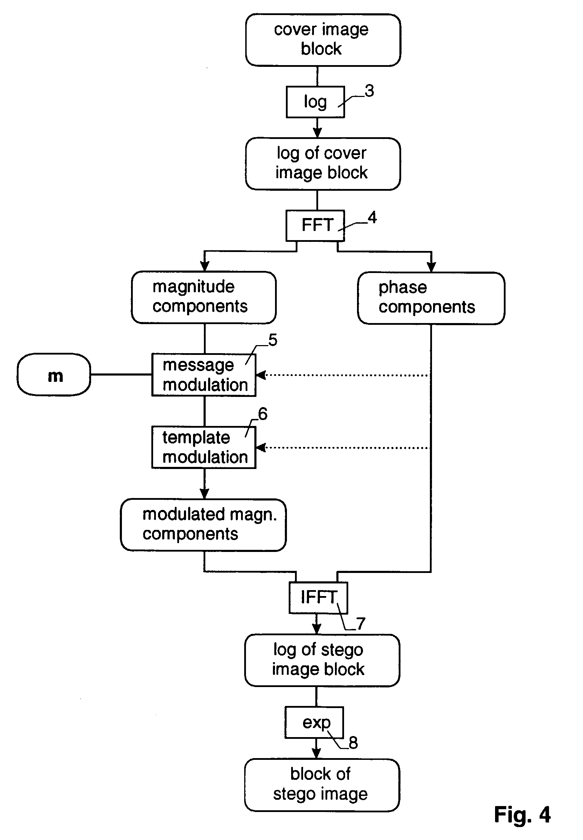

As shown in Fig. 3, he apparatus for the ICO based watermark protection is partitioned into four processes, namely the ICH with the name H, the IB process with the name B, the PKI process with the name I, and the ICO process with the name O. Suppose $(ps_H, vs_H)$, $(pc_H, vc_H)$, $(ps_B, vs_B)$, $(pc_B, vc_B)$, $(ps_I, vs_I)$ $(pc_I, vc_I)$, $(ps_O, vs_O)$, and $(pc_O, vc_O)$ are the unique elliptic curve key pairs of H, B, I and O, respectively. H has an authentic copy of $Cert_B$ and $Cert_O$ whose signatures were verified with the authentic copy of $vs_I$, B has an authentic copy of $Cert_H$ and $Cert_O$ whose signatures were verified with the authentic copy of $vs_I$, and O has an authentic copy of $Cert_H$ and $Cert_B$ whose signatures were verified with the authentic copy of $vs_I$.

The following phases are applied by the processes of the ICO based copyright protection apparatus:

Phase 1 to Phase 3: See Phase 1 to Phase 3 of the Individual watermark protection.

Phase 4:

H stores the resulting stego image SI.

Phase 5:

H and O execute the following steps for the secure registration or validation of copyright requests, and the generation of copyright certificates.

1. H and O execute

$AKAP(H, O, K_{HO}, ps_H, vs_H, pc_H, vc_H, ps_O, vs_O, pc_O, vc_O)$

for the generation of a shared symmetric session key $K_{HB}$.

2. H retrieves the CRD and generates the copyright request CR,

$CR := \langle K_{HB}[TD\|SigTD] \rangle$, with
$TD := CRD\|TVP\|H\|O$, and $DSSAP_G(ps_H, TD, SigTD)$.

H then transmits CR to O.

3. O receives CR, deciphers $K_{HB}[TD\|SigTD]$, and verifies TD, applying

$DSSAP_V(vs_H, SigTD, IVR)$

where IVR denotes the intermediate verification result. If

$IVR = crh(TD)$, with $TD := CRD\|TVP\|H\|O$,

then TD has been successfully verified and the next step shall be executed. In any other case, the processing and communication between the H and O is stopped. O verifies the CRD with respect to legal copyright issues (uniqueness, originality, etc.). If the data has been successfully verified then the next step shall be executed. In any other case, the processing and communication between the H and O is stopped.

4. If verification was successful, O generates the corresponding digital copyright certificate executing

$DSSAP_G(ps_O, CCD, SigCCD)$.

O then stores the copyright certificate CC := CCD\|SigCC and generates then the Copyright Confirmation Reply CCR

$CCR := \langle K_{HO}[TD\|SigTD] \rangle$, with
$TD := CC\|TVP\|O\|H$, and $DSSAP_G(ps_O, TD, SigTD)$.

O then transmits CCR to H.

5. H receives CCR, deciphers $K_{HO}[TD\|SigTD]$, and verifies TD, applying

$DSSAP_V(vs_H, SigTD, IVR)$,

where IVR denotes the intermediate verification result. If IVR = crh(TD), with $TD := CC\|TVP\|O\|H$, then TD has been successfully verified. H then verifies and stores the CC.

The following phase can now be executed repeatedly, if necessary, without repetition of the previous phases.

Phase 6:

H and B execute the following steps for the trading of copyright protected digital images:

1. H and B execute

$AKAP(H, B, K_{HB}, ps_H, vs_H, pc_H, vc_H, ps_B, vs_B, pc_B, vc_B)$

for the generation of a shared symmetric session key $K_{HB}$.

2. B generates the trading transaction T1,

$T1 := \langle K_{HB}[TD\|SigTD] \rangle$, with
$TD := ID_{Ci}\|TVP\|B\|H$, and $DSSAP_G(ps_B, TD, SigTD)$.

B then transmits T1 to H.

3. H receives T1, deciphers $K_{HB}[TD\|SigTD]$, and verifies TD, applying

$DSSAP_V(vs_B, SigTD, IVR)$

where IVR denotes the intermediate verification result. If

$$IVR = crh(TD), \text{ with } TD := ID_{CI}||TVP||B||H,$$

then TD has been successfully verified and the next step shall be executed. In any other case, the processing and communication between the H and B is stopped.

4. If the verification was successful, H retrieves with the $ID_{CI}$ information the corresponding stego image SI and generates the trading transaction

$$T2 := \langle K_{HB}[TD||SigTD]\rangle, \text{ with}$$
$$TD := SI ||TVP||H||B, \text{ and } DSSAP_G(ps_H, \text{ } TD, \text{ } SigTD).$$

H then transmits T2 to B.

5. B receives T2, deciphers $K_{HB}[TD||SigTD]$, and verifies TD, applying

$$DSSAP_V(vs_H, SigTD, IVR),$$

where IVR denotes the intermediate verification result. If IVR = crh(TD), with TD := SI||TVP||H||B, then TD has been successfully verified. B stores then the SI.

Remark:

B may check the copyright certificate requesting O to transfer an authentic copy of the copyright certificate for a given image identifier $ID_{CI}$. Except the data transferred, the applied protocol is the same as described in phase 4.

If B would like to transfer a specific copyright of a CI to another legal party, he may initiate a copyright revocation request with O. The different phases of this request are analogue to the copyright request.

The method described in this section II requires a suitable watermarking technique. Various such techniques are known and can be employed. However, a preferred technique is described in the next section.

III. Embedding the watermarks

The watermarking technique described here comprises the following steps:

a) An error-control coding technique for the message to be transmitted in the watermark;
b) A encoding technique to encode the message resulting from step a);
c) A reliable method for embedding the encoded message from step b) in the image without introducing visible artifacts.

Each of these three aspects can be applied to conventional watermarking techniques. Preferably, they are used in combination to provide a highly reliable, robust and powerful method for marking data sets. This method can be applied for any watermarking applications, in particular to the application described in section II of this disclosure.

Steps a) and b) can be used for embedding watermarks in any type of data while step c) is optimized for embedding watermarks in images.

In the following, the three elements of the watermarking technique are described in detail.

III.a) Error control coding

Error control coding is applied to the message prior to encoding step III.a). When used in combination with the procedure described in section II, the message corresponds to one of the blocks $BL_i$.

Preferably, symbol based Reed Solomon (RS) codes are applied for this purpose. The advantages are the following:

- RS codes correct symbol errors rather than bit errors, and
- RS codes can correct erasures as well as errors. Erasures can be factored out of the key equation, which means that "erased" symbols can be ignored. They do not play any role in the error control mechanism - an erasure is useless redundancy.

Being able to discard erased symbols has two advantages:

- If the posterior probability of a received symbol is low, it may be ignored.
- RS codes only come in standard sizes. For example a 255 x 8 bit code is common. Most commonly used RS error control codes appear to be too large to be used in watermarking. However, it is possible to make almost any RS code fit a watermarking application by judiciously selecting symbols as being erased (because they were never embedded in the image in the first place).

III.b) Encoding the message

During encoding, the message to be transmitted in the watermark is transformed into a form suited for being used in the modulation of image components. At the same time, it is encrypted using a suitable key.

If used with the method of section II, the encoding procedure has access to the cryptographic keys $p_H$ and $v_H$ (or their hash values), which are applied as seeds to generate pseudo-random sequences as described below. The public key is used for encoding the message of the public watermark, the private key is used for the private watermark. Knowledge of the corresponding key (or hash value) is required for recovering the message from the watermark.

A watermark may be embedded or extracted by the key owner. In this form spread spectrum is a symmetric key cryptosystem. From the point of view of embedding watermarks in images given the cryptographic keys the sequences themselves can be generated. A good spread spectrum sequence is one which combines desirable statistical properties such as uniformly low cross correlation with cryptographic security.

Suppose we are given a message B (e.g. that was provided with error coding in above step III.a). The message has the binary form $b_1b_2...b_L$, where $b_i$ are its bits. This can be written in the form of a set of symbols $s_1s_2 . . .s_M$ - most generally by a change in a number base from 2 to B. The next stage is to encode each symbol $s_i$ in the form of a pseudo random vector of length N, wherein each element of this vector either takes the value 0 or 1. N is e.g. in the order of 1000 to 10000 (typically in the order of 10% of the total number of image coefficients (Fourier components) that can, theoretically, be modulated).

In a preferred embodiment, this is carried out by using a pseudo random generator seeded by the key $crh(p_H)$ or $crh(v_H)$.

To encode the first symbol a pseudo random sequence v of length N + B - 1 is generated. To encode a symbol of values where $0 < s < B$ the elements $v_s$, $v_{s+1}$ ... $v_{s+N-1}$ are extracted as a vector $r_1$ of length N. For the next symbol another independent pseudo random sequence is generated and the symbol encoded as a random vector $r_2$. Each successive symbol is encoded in the same way. Note that even if the same symbol occurs in different positions in the sequence, no collision is possible because the random sequences used to encode them are different - in fact they are statistically independent. Finally the entire sequence of symbols is encoded as the summation:

$$\mathbf{m} = \Sigma_{i=1..M} \; \mathbf{r}_i$$

The pseudo-random vector **m** has N elements, each varying between 0 and M. In a next step, the elements of **m** are offset to make their mean zero. These elements will determine the strength of modulation of the Fourier components of the image in step III.c.

When decoding the watermark, a vector **m'** (read-out message) is derived from the stego-image. In oblivious watermarking, **m'** corresponds to the modulated Fourier coefficients. Hence, in general **m'** will not be equal but "similar" to **m**.

To decode s from **m'**, the elements of **m'** are first offset to make their mean zero. Then, starting from the (known) seed, the first random sequence v of length N + B - 1 is generated and the correlation of v with **m'** is calculated. The peak of the correlation indicates the off-

set $s_1$ in the random sequence that was used for generating $r_1$. Then, the next random sequence v is generated and cross-correlated with **m'** to retrieve $s_2$, etc.

Reliable communications of the apparatus are best accommodated by using m-sequences that possess minimum cross correlation with each other. This is the same as maximizing the Euclidean distance between vectors $v_1$, $v_2$, $v_3...$ .

If M is sufficiently large, the statistical distribution of the message **m** should approach a Gaussian (Central Limit Theorem). A Gaussian distributed watermark has the advantage that it is more difficult to detect. The variance increases with order $M^{1/2}$; in other words, the expected peak excursion of the sequence is only order $M^{1/2}$.

III.c) Embedding the message in the image

In this step, the encoded message **m** (e.g. as obtained in the previous step) is applied to the image for generating the watermark.

In contrast to steps III.a) and III.b), embedding the message in the image requires some knowledge of the nature of the data stored in the image. In the following, the image is assumed to be a two-dimensional image. The method is optimized for robustness against operations generally applied to images such as translation, cropping, rotating, scaling. (The method is not optimized for other types of data, such as sound or text.)

In order to achieve robustness against circular translation, the image block is first subjected to a Fourier transform. Then, message **m** is used to modulate the Fourier components. In addition to this, a template is embedded in the image, which template can be used for detecting a rotation and scaling of the image when reading the watermark. A tiling mechanism and suitable phase-dependent correction are applied for providing robustness against cropping.

Figure 4 shows a detailed diagram describing the embedding of the watermark. Calculation starts from the cover image:

1. If the image is a color image, then compute the luminance component (by replacing each pixel by g/2 + r/3 + b/6, where g, r and b are its green, red and blue components) and use these values for the following calculations.
2. Divide the image into adjacent blocks of size 128 x 128 pixels.
3. Map the image luminance levels (or gray levels for a black and white image) because it corresponds to a perceptually "flat" domain by replacing them with their logarithm. The logarithm is a good choice because it corresponds of the Weber-Fechner law which describes the response of the human visual system to changes of luminance.
4. Compute the FFT (Fast Fourier Transform) of each block. From the real and imaginary components obtained in this way, calculate corresponding magnitude and phase components. The magnitude components are translation invariant and will therefore be used in the following modulation steps. (However, it is possible to derive translation invariants from the phase spectrum as well, which could also be modulated).

5. Select the magnitude components to be modulated. To encode a message **m** of length N, a total number of N components are modulated. In non-oblivious watermarking, any components can be modulated. For oblivious watermarking, because of interference of the cover image with the watermark, the largest (highest energy) components (at about the lowest 10% of the frequencies) are avoided and components at medium frequencies (about next 30%) are used. These figures are chosen because they generally give a good compromise between robustness and visibility of the watermark. There are two methods for selecting the components to be modulated:

a) The selection of the components to be modulated does not depend on the given image. Rather, the same components are selected for every image. The author as well as the reader of the watermark know the positions of the components to be selected in advance.

b) The largest components (inside the allowable frequency range) are used for modulation.

When selecting the components to be modulated, care must be taken to preserve the symmetry imposed on the Fourier components $F(k_1, k_2)$ by the fact that the image block is real valued:

$$F(k_1, k_2) = F^*(N_1 - k_1, N_2 - k_2)$$

(where $N_1$, $N_2$ designate the size of the image block). Once the magnitude components ($M_1$, ... $M_N$) to be modulated are chosen, the corresponding value $m_i$ of message **m** is added to or subtracted from the corresponding selected magnitude component $M_i$. Addition is used, if the corresponding phase component $P_i$ is between 0 and $\pi$, subtraction if it is between $\pi$ and $2\pi$. This provides robustness against translation and cropping (see below).

Before adding/subtracting the values $m_i$ to/from $M_i$, the vector **m** can be scaled to adjust the magnitude of its elements to those of the components $M_i$.

Generally, the elements $m_i$ should be in the same order of magnitude as the components $M_i$. The depth of modulation or amplitude of the embedded signal should depend on the objective measure of the perceptual significance. The lower the perceptual significance, the higher should be the amplitude of the watermark. However, for simplicity, the amplitude for all components is kept constant.

6. Add a template by a second modulation of the magnitude components. This is described in more detail below.

7. Compute the inverse FFT using the phase components and the modulated magnitude components.

8. Compute the inverse of the perceptual mapping function of step 3. For Weber-Fechner law mapping, the inverse function is an exponential.

9. Replace each watermarked block in the image to obtain the stego image.

10. If the image is a color image, then rescale the red, green and blue components by the relative change in luminance introduced by embedding a watermark. Typically, the red, green and blue pixels occupy a byte each in program memory. If overflow or underflow occurs then the pixel is set to the upper bound 255 or lower bound 0 respectively.

Template:

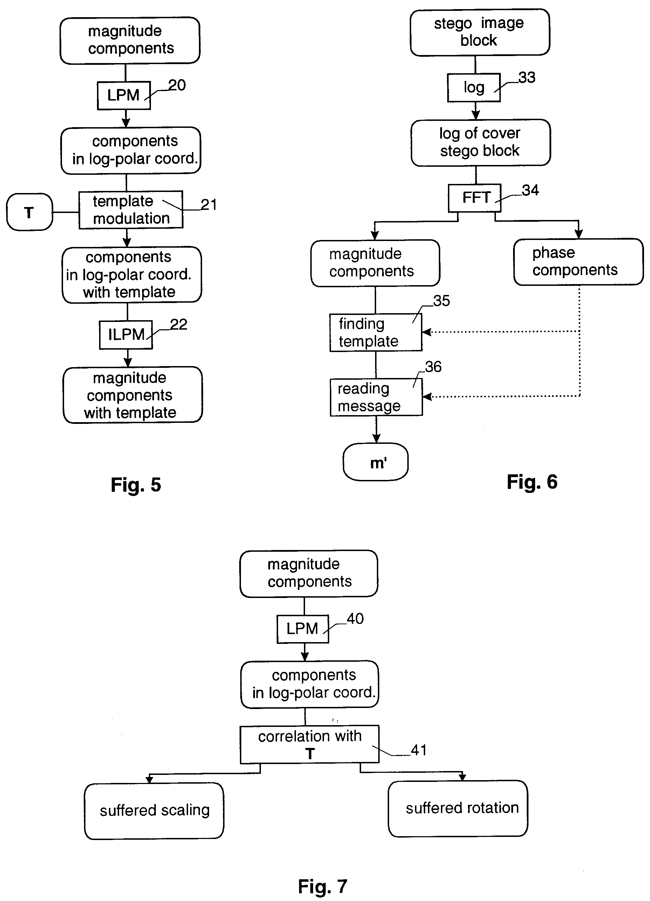

As mentioned above, a template is added to the image in step 6. The steps for generating the template are illustrated in Fig. 5:

20. Apply a log-polar map to the magnitude components, i.e. transform them into a polar coordinate system $(\Theta, \log\text{-}r)$ with logarithmic radius axis.

In this representation, a scaling of the image leads to an offset of the components along the log-r axis. A rotation of the image leads to an offset along the $\Theta$ axis.

Preferably, low pass filtering is used for interpolating the frequency space components during this mapping.

The magnitude components belonging to very low or high frequencies are not mapped. The following modulation is only applied to components in medium frequency range.

21. Select the magnitude components in the log-polar coordinate system to be modulated. Typically, about 10% of all components are to be modulated.

The pattern **T** formed by the selected components in log polar space should be such that its auto-correlation under translation is weak. For this purpose, the indices of the selected components should be coprime or be derived from a two-dimensional random sequence.

Each selected component is increased by a given value.

22. Map the modulated points by change of coordinates back into frequency space.

The pattern **T** formed by the selected components in log polar space is predefined and known to the reader of the watermark.

It must be noted that the calculation of the log-polar transform is not required for generating the template. Instead of this, the pattern **T** of the components to be modulated in log-polar space can be mapped back to frequency space, which results in a pattern **T'** in frequency space that can be applied directly to (e.g. added to) the components in frequency space.

As will be explained below, the template is not required for non-oblivious watermarking.

Figure 6 shows a detailed diagram illustrating the steps for reading a watermark from the stego image:

31. If the image is a color image then compute the luminance component and use these values for the following calculations.

32. Divide the image into adjacent blocks of size 128 x 128.

33. Map the image luminance levels (or gray levels) to the perceptually "flat" domain by replacing them with their logarithm.

34. For each block compute the FFT.

35. Determine the rotation and scaling that the image suffered by finding the template in log-polar space. This is described below.

36. Using the results of step 35, read the modulated components to generate message **m'**. This requires the knowledge of the method that was used in step 5 for selecting the components to be modulated.

Once that the message **m'** is recovered, it is demodulated and error corrected using the methods described in sections III.a) and III.b).

Finding the template:

The steps for finding the template are illustrated in Fig. 7:

40. Apply log-polar mapping to the magnitude components of the Fourier transform. The magnitude components belonging to very low or high frequencies are not mapped. The following analysis is only applied to components in medium frequency range

41. For oblivious watermarking, calculate the normalized cross correlation of the components in log-polar space with the template pattern **T** that was used for generating the template in step 21 and find the point of best correlation. If the image has neither been rotated or scaled, this point is at zero. Scaling leads to a corresponding offset along the log-r axis, rotation to a corresponding offset along the $\Theta$ axis.

For non-oblivious watermarking, the log polar transform of the Fourier components of the cover image can be used instead of template pattern **T** for retrieving scaling and rotation.

The cross correlation can be calculated efficiently using conventional Fourier techniques.

Properties of the watermark:

In the following, some of the properties of the watermark generated using the steps described above are discussed.

Resistance to cropping:

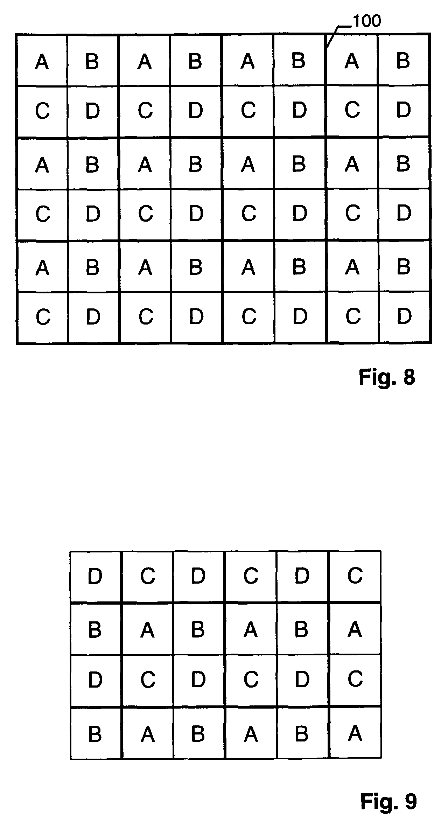

One feature of translation invariants developed using the Fourier transform is that they are invariant to circular translations (or cyclic shifts). This is used to construct watermarks that are invariant to cropping. This is illustrated by reference to Figs. 8 and 9.

As mentioned above, the image is split into blocks and the watermark is applied to each block. In other words, the same modulation pattern is applied to the Fourier components of each block, wherein the modulation pattern is given by the corresponding encoded messages **m**.

Fig. 8 shows such an image where the fat lines 100 designate the borders between the blocks. Suppose that the watermark in a standard size block will be of the form:

$$T=[A\ B\ ;\ C\ D]$$

where the submatrices A, B, C and D are of arbitrary size. A circular translation of such a watermark is of the form:

$$S=[D\ C\ ;\ B\ A].$$

The original stego image is tiled with watermarks in the pattern [T T T T ; T T T T ; T T T T]. Therefore, a cropped section of the matrix will carry a watermark in the form [S S S S ; S S S S ; S S S S]. This is illustrated in Figure 9. When reading the watermark of the cropped image of Fig. 9, each block carries the watermark S. Since S is a circular transform of T, it can be read without problems in the Fourier domain using the steps outlined above.

Note, however, that the cover image is not tiled, only the watermark is. Therefore, while cropping merely induces a circular translation of the watermark in each block, the change of image in each block is not a circular translation. To compensate for this, the phase components $P_i$ of the Fourier transform must be used for correcting the sign of the modulation of the magnitude components $M_i$, as it is outlined under step 5 above.

The optimum size of block depends on a number of different factors. A size that is a power of two is useful because the FFT can be used. The block size also must be small enough to withstand cropping but large enough to comfortably contain a watermark. The best compromise for block size is 128.

Resistance to scaling and rotation:

As mentioned above, reading the template in log-polar space allows to detect and measure any scaling and/or rotation that was applied to the image. This information can then be used for reading the watermark. Since the reader knows the pattern that was used for modulating the magnitude components in step 5, he can identify the modulated components in the scaled and rotated image and derive the message **m'** therefrom.

Note that the apparatus does not explicitly use a rotation and scale invariant watermark but instead searches the parameter space of rotations and scales. Since searching the space of rotation and scales in the frequency or space domain is quite complicated, the log-polar map is used where these parameters are Cartesian coordinates and can be searched using efficient correlation techniques.

Redundancy:

The watermark is embedded in blocks of a fixed size with exactly the same watermark embedded in each block. This means that the watermark can be recovered from a single block only. This leads to a redundancy that increases the chance of extracting the watermark correctly from more than one block.

IV. Summary

The following summarizes some of the properties of the preferred embodiments of the invention.

The use of an asymmetric cryptographic key pair for the seed generation enables the execution of asymmetric key agreement protocols with message recovery or appendix and the protection of the communication between the involved parties. Different security services for the communication, such as mutual authentication, integrity, confidentiality and non-repudiation are supported by the system with one asymmetric cryptographic key pair of the watermark author only for a registration or trading process

The present technique enables a strong binding relation between the image ID, the image, and the ICH if the ICH registers his copyright at the ICO. If an image is watermarked later by an unauthorized person, the time stamp in the copyright certificates resolves the copyright ownership.

The ICH does not have to reveal his private cryptographic key if ownership verification has to be applied by a different legal party.

The present technique supports transferral of copyrights. If copyright is transferred to another legal party, corresponding copyright revocation certificates may be generated.

Digital signatures techniques are applied for the security of the communication between different parties and the authentication data embedded in a private or public watermark of an image. No signature labeling techniques of the complete image are applied by the system.

The Fourier-Mellin transform has been enhanced as described above. The Fourier Mellin Transform is the Fourier Transform of a log polar map. In the present invention, the log polar map of a Fourier transform is used as a means of facilitating rotation and scaling invariance.

Circular translation invariants are used as a means of constructing digital watermarks that are invariant to cropping.

In contrast to some known techniques, the present system does not require a database of all watermarks that were ever embedded in image anywhere.

Information is embedded and/or retrieved in the log polar domain of the Fourier transform. Frequency components are modulated which are oblivious to the cover image but which also have the property that they form an unambiguous non-repeated pattern in log-polar space. They are used for determining the degree of rotation and scaling suffered by a stego-image in the absence of the cover-image. Coprime frequencies are useful for generating such a pattern or template. Uniform random sampling of log polar space is another method that can be applied.

The technique applies a new concept of invariants which are based on the modification of the well known FM transform and the coprime frequencies.

The methods described above can be incorporated into an apparatus, such as one or more computers, using know programming and hardware techniques. To prove the feasibility of the approach, a Java based copyright protection and authentication environment for digital images has been implemented. The PKI, the ICH, the ICO, and the IB application processes all implement a Graphical User Interface and a server, supporting both console users and other requests through a socket interface.

**Claims**

1. A method for generating and transmitting a data set between two parties H and B comprising the steps of

    a) providing a cover data set (CI) corresponding to the data set to be transmitted,
    b) generating a stego data set (SI) of said cover data set (CI) by embedding at least one digital watermark in said cover data set (CI), wherein said watermark is encoded using at least one key of an asymmetric cryptographic key pair $(ps_H, vs_H)$ of H, said key pair comprising a secret private key $(ps_H)$ and a known public key $(vs_H)$ derived therefrom,
    c) establishing a cryptographically secure transmission between parties H and B with a key protocol using at least said key pair ($ps_H$, $vs_H$) of H,

d) transmitting said stego data set (SI) from said party H to said party B within said secure transmission.

2. The method of claim 1, wherein said cryptographically secure transmission between said parties H and B is established using an asymmetric key protocol ($AKAP(H,B,K_{HB},ps_H,vs_H,ps_B,vs_B)$) based on said key pair ($ps_H$, $vs_H$) of H and a private and public asymmetric cryptographic key pair ($ps_B$, $vs_B$) of B for generating a common key ($K_{HB}$) between said parties H and B.

3. The method of one of the preceding claims wherein said key pair ($ps_H$, $vs_H$) of H is an elliptic curve key pair.

4. The method of one of the preceding claims wherein said step b) further comprises the steps of

generating at least one private watermark, wherein said private watermark is encoded using said private key ($ps_H$) of H, and preferably also
generating at least one public watermark, wherein said public watermark is encoded using said public key ($vs_H$) of H.

5. The method of claim 4 wherein said private watermark is encoded using a hash value ($crh(ps_H)$) of said private key ($ps_H$) and can be decoded by using said hash value ($crh(ps_H)$).

6. The method of one of the preceding claims wherein said step b) comprises the step of generating at least one public watermark, wherein said public watermark is encoded using a hash value ($crh(vs_H)$) of said public key ($vs_H$) of H.

7. The method of one of the preceding claims wherein said step b) comprises the steps of

i) providing a message ($s_1$, $s_2$, ..., $s_M$) to be transmitted in said at least one watermark, said message consisting of a plurality of symbols,
ii) providing a pseudo random generator seeded with a seed value derived from at least one key of said key pair ($ps_H$, $vs_H$) of H or a hash value thereof,
iii) encoding said message using values from said pseudo random generator.

8. The method of claims 7 wherein said step iii) comprises

for each of said symbols ($s_i$), calculating a symbol vector ($r_i$), wherein all elements of said vector are derived from numbers from said pseudo random generator,
adding said symbol vectors ($r_i$) to generate an encoded message ($m$) and using said encoded message for embedding said watermark.

9. The method of claim 8 wherein for each of said symbols ($s_i$) said pseudo random generator is used for generating a pseudo random sequence of numbers ($v_1$, $v_2$, ...), and wherein the value of said symbol ($s_i$) is used for selecting a sub-sequence within said pseudo random sequence for forming said symbol vector ($r_i$).

10. The method of one of the claims 8 or 9 comprising the following steps for decoding said watermark:

extracting a read-out message ($m'$) from said watermark, said read-out message being a vector having the same length, if erased elements are replaced by zero, as said symbol vectors ($r_i$),
generating all possible values of said symbol vectors ($r_i$) using said pseudo random generator seeded with said seed and calculating the correlation between all said possible values and said read-out message ($m'$).

11. The method of claims 9 and 10 comprising the step of calculating the cross-correlation between said pseudo random sequences of numbers ($v_1$, $v_2$, ...) and said read-out message ($m'$) for retrieving said symbols ($s_i$).

12. The method of one of the preceding claims comprising the step of encoding a message for being embedded in said watermark by using symbol based Reed Solomon codes.

13. The method of one of the preceding claims characterized in that said step b) further comprises the step of calculating a logarithm of said cover data set (CI) before embedding said watermark for embedding said watermark in a perceptually flat domain.

14. Method for generating a stego data set (SI) of a cover data set (CI) especially for step b) of one of the preceding claims comprising the steps of

generating at least one message ($IAD_{CI}$),
applying a digital signature to said message ($IAD_{CI}$) using an asymmetric cryptographic key pair ($p_H$, $v_H$),
generating said stego data set (SI) of said cover data set (CI) by generating at least one digital watermark in said cover data set (CI), wherein said watermark contains said message (IAD$_{CI}$).

**15.** Method for generating and transmitting a data set between two parties H and B, especially of one of the preceding claims, comprising the steps of

providing a cover data set (CI) corresponding to the data set to be transmitted, generating a stego data set (SI) of said cover data set (CI) at a party H by generating at least one digital watermark in said cover data set (CI), transmitting said stego data set (SI) to a registration party (O), and permanently storing certification data (CCD) at said registration party (O), said certification data comprising a hash value of said stego data set (SI), a digital time stamp (TVP) and information designating said party H.

**16.** The method of claim 15 further comprising the steps of generating a digital signature of said certification data (CCD) using an asymmetric cryptographic key pair (ps$_O$, vs$_O$) of said registration party (O), transmitting said certification data (CCD) and said digital signature to said party H, and verifying said digital signature at said party H by using a public key (vs$_O$) of said key pair of said registration party.

**17.** Method for generating and verifying a watermark in a cover data set (CI) representing a cover image, especially for step b) of one of the preceding claims, comprising the following steps for generating said watermark

A) calculating the Fourier transform of at least part of said cover image for generating Fourier components of said cover image, and B) modulating at least part of said Fourier components using a template modulation pattern (T'), C) using the inverse Fourier transform for generating a stego image, said method further comprising the following steps for verifying said watermark in a possibly scaled and/or rotated version of said stego image, D) calculating the Fourier transform of the possibly scaled and/or rotated version of said stego image for generating Fourier components of said stego image, E) calculating a log-polar transform of said Fourier components of said stego image, and F) calculating the cross correlation between a log-polar transform (T) of said modulation pattern (T') and said log-polar transform of said Fourier components of said stego image for evaluating a scaling and/or rotation factor.

**18.** The method of claim 17 wherein said step B) further comprises the steps of

calculating a log-polar transform of said components of said cover image for generating log-polar components, modulating said log polar components using a log-polar transform (T) of said modulation pattern (T').

**19.** Method for generating a watermark in a cover data set (CI) representing a cover image especially for one of the preceding claims, characterized by the step of dividing said image into a plurality of adjacent blocks and by the following steps carried out for each block:

calculating the Fourier transform of the block of the block, and modulating at least part of the magnitude components of the Fourier transform of the block using a modulation pattern, wherein the same modulation pattern is used for all blocks.

**20.** The method of claim 19, wherein the modulation pattern determines values to be added and/or subtracted for each of said magnitude components and wherein, at each frequency, the corresponding phase component of the Fourier transform is used for determining if said value is to be added or subtracted from said magnitude component.

**Fig. 1**

**Fig. 2**

**Fig. 3**

**Fig. 4**

**Fig. 5**

**Fig. 6**

**Fig. 7**

Fig. 8

Fig. 9

**European Patent Office**

**EUROPEAN SEARCH REPORT**

Application Number

EP 97 81 0708

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DELAIGLE J -F ET AL: "DIGITAL WATERMARKING" PROCEEDINGS OF THE SPIE, vol. 2659, 1 February 1996, pages 99-110, XP000604065 | 1 | H04N1/32 |
| A | * the whole document * | 2-6, 14-16 | |
| | --- | | |
| Y | EP 0 534 419 A (IBM) 31 March 1993 | 1 | |
| A | * page 8, line 36 - page 9, line 20 * | 2-6, 14-16 | |
| | --- | | |
| A | KIYOSHI TANAKA ET AL: "A DIGITAL SIGNATURE SCHEME ON A DOCUMENT FOR MH FACSIMILE TRANSMISSION" ELECTRONICS & COMMUNICATIONS IN JAPAN, PART I - COMMUNICATIONS, vol. 74, no. 8, 1 August 1991, pages 30-36, XP000287493 * Sections 1 and 2 * | 1,14 | |
| | --- | | TECHNICAL FIELDS SEARCHED (Int.Cl.6) |
| D,A | ZHAO J ET AL: "EMBEDDING ROBUST LABELS INTO IMAGES FOR COPYRIGHT PROTECTION" PROCEEDINGS OF THE KNOWRIGHT. CONFERENCE. PROCEEDINGS OF THE INTERNATIONAL CONGRESS ON INTELECTUAL PROPERTY RIGHTS FOR SPECIALIZED INFORMATION, KNOWLEGDE AND NEW TECHNOLOGY, 21 August 1995, pages 242-251, XP000603945 * Section 2 * | 1 | H04N |
| | --- | | |
| | -/-- | | |

The present search report has been drawn up for all claims

| Place of search | Date of completion of the search | Examiner |
|---|---|---|
| THE HAGUE | 6 August 1998 | Hazel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

European Patent
Office

Application Number

EP 97 81 0708

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | ZHAO J.: "a www service to embed and prove digital copyright watermarks" PROCEEDINGS OF THE EUROPEAN CONFERENCE ON MULTIMEDIA APPLICATIONS, SERVICES AND TECHNIQUES, vol. 2, 28 - 30 May 1996, pages 695-709, XP000199921 Louvain la Neuve (BE) * Section 4 * | 15,16 | |
| A | DELAIGLE J-F ET AL: "digital images protection techniques in a broadcast framework: an overview" PROCEEDINGS OF THE EUROPEAN CONFERENCE ON MULTIMEDIA APPLICATIONS, SERVICES AND TECHNIQUES, vol. 2, 28 - 30 May 1996, pages 711-727, XP000199920 Louvain la Neuve (BE) * Section 4 * | 15,16 | |
| A | EP 0 539 726 A (IBM) 5 May 1993 | | |
| A | WO 96 36163 A (RHOADS GEOFFREY B ;DIGIMARC CORP (US)) 14 November 1996 * page 80, line 7 - page 84, line 9 * | 17 | |
| A | WO 96 27259 A (HIGHWATER FBI LIMITED ;HILTON DAVID (GB)) 6 September 1996 * page 16, line 33 - page 17, line 14 * | 17 | |
|   | -/-- | | |

TECHNICAL FIELDS
SEARCHED (Int.Cl.6)

The present search report has been drawn up for all claims

| Place of search | Date of completion of the search | Examiner |
|---|---|---|
| THE HAGUE | 6 August 1998 | Hazel, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

European Patent
Office

**EUROPEAN SEARCH REPORT**

Application Number

EP 97 81 0708

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | O RUANAIDH J.J.K. ET AL: "phase watermarking of digital images" PROCEEDINGS OF 3RD IEEE INTERNATIONAL CONFERENCE ON IMAGE PROCESSING, vol. 3, 16 - 19 September 1996, pages 239-242, XP000199952 Lausanne (CH) * the whole document * | 19 | |
| X | EP 0 766 468 A (NIPPON ELECTRIC CO) 2 April 1997 * column 11, line 4 - column 12, line 2 * | 19 | |

TECHNICAL FIELDS
SEARCHED (Int.Cl.6)

The present search report has been drawn up for all claims

| Place of search | Date of completion of the search | Examiner |
|---|---|---|
| THE HAGUE | 6 August 1998 | Hazel, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

22

European Patent
Office

Application Number

EP 97 81 0708

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

| | | |
|---|---|---|
| **European Patent Office** | **LACK OF UNITY OF INVENTION**<br>**SHEET B** | **Application Number**<br>EP 97 81 0708 |

The Search Division considers that the present European patent application does not comply with the requirements of unity of invention and relates to several inventions or groups of inventions, namely:

1. Claims: 1-14

   Method for embedding a digital watermark in a data set using at least one of an asymmetric cryptographic key pair

2. Claims: 15,16

   Method for generating a digital watermark in a data set, for transmitting that to a registration party and for certification data there

3. Claims: 17-20

   Method for generating a watermark in a data set comprising calculating the Fourier transform of part of the data set and modulating part o